# EUROPÄISCHE PATENTSCHRIFT

(11) **EP 1 417 454 B1**
(45) Veröffentlichungstag und Bekanntmachung des Hinweises auf die Patenterteilung: **06.05.2009**
(21) Anmeldenummer: 02767097.5
(22) Anmeldetag: 13.08.2002
(51) Int. Cl.: G01C 3/08, G02B 7/28, H04N 5/232

(54) **VERFAHREN UND VORRICHTUNG ZUR ENTFERNUNGSBESTIMMUNG**
METHOD AND DEVICE FOR DETERMINING DISTANCE
PROCEDE ET DISPOSITIF DE DETERMINATION DE DISTANCE

(30) Priorität: 15.08.2001 DE 10140017; 23.10.2001 DE 10153113
(43) Veröffentlichungstag der Anmeldung: 12.05.2004
(73) Patentinhaber: Hella KGaA Hueck & Co., 59552 Lippstadt (DE)
(72) Erfinder: SCHILLING, Thomas, 13125 Berlin (DE)
(74) Vertreter: Schaumburg, Thoenes, Thurn, Landskron, Eckert
(86) Internationale Anmeldenummer: PCT/DE2002/002985
(87) Internationale Veröffentlichungsnummer: WO 2003/016820

(56) Entgegenhaltungen:
- WO-A-94/18788
- US-A- 4 458 145

## Beschreibung

Die Erfindung betrifft ein Verfahren und eine Vorrichtung zur Entfernungsbestimmung zwischen einer Bildaufnahmeeinrichtung, insbesondere Videokamera, und einem Objekt in einer Szene auf der Basis der Ermittlung der Unschärfe von Objektpunkten. Anwendung findet die Erfindung u. a. in der Sicherheitstechnik, in der Bildverarbeitung bei Kraftfahrzeugen und in der Roboter- und Handhabungstechnik.

### Stand der Technik

Es sind verschiedene Verfahren und Vorrichtungen zur Ermittlung von Entfernungen mittels Videosensorik bekannt:
- Stereoverfahren (zwei Sensoren),
- Strukturierte Beleuchtung der Szene (Ein- und Zweisensorsysteme),
- Bewegung des Sensorchips senkrecht zur Schärfebene mit parallel zur Bildebene ausgerichtetem Chip.

Diese Systeme verlangen relativ komplizierte Vorrichtungen, benötigten entweder zwei Bildaufnahmeeinrichtungen oder sehr präzis arbeitende Mechanismen zur Bewegung des Objektivs der Bildaufnahmeeinrichtung oder des Sensors in der Schärfeebene.

Des weiteren ist aus der US-Patentschrift 6 023 056 ein selbstfokussierendes Bildaufnahmeverfahren bekannt, bei dem zur Kalibrierung des Bilderfassungssystems ein zweidimensionaler Bildsensor im Bereich des Brennpunktes innerhalb der Bilderfassungseinrichtung schräg angeordnet ist.

Dieses Verfahren zur Fokussierung eines Bildes, welches nicht explizit der Entfernungsmessung dient, hat den Nachteil, dass zuvor eine Kalibrierung mittels einer vorgegebenen Rastervorlage notwendig ist. Ausgehend von einer schärfsten Kante wird die Schärfe der nächsten Kante usw. bestimmt und das so fokushalibrierte Bild in einer Liste erfasst und in einem Bildprozessor gespeichert. Für eine scharfe Abbildung eines Bildes vergleicht dann der Bildprozessor Zeile für Zeile das Bild der Szene mit dem fokuskalibrierten gespeicherten Bild.

Außerdem ist für die Fertigung derartiger Bildaufnahmeeinrichtungen eine geringe Toleranz der optischen Bauteile gefordert.

Darüber hinaus sind die bekannten Verfahren und Vorrichtungen sehr empfindlich gegenüber Erschütterungen und verlangen eine sehr genaue Kalibrierung und Justierung.

### [Aufgabe der Erfindung]

Aufgabe der Erfindung ist es, ein Verfahren zur Entfernungsbestimmung zwischen einer Bildaufnahmeeinrichtung, insbesondere Videokamera, und einem Objekt in einer Szene zu schaffen, das mit einer einfachen und robusten Vorrichtung und mit nur einem Objektiv realisierbar ist sowie für viele Anwendungsfälle mit ausreichender Genauigkeit ohne aufwendige Kalibrierung und Justierung durchgeführt werden kann.

Die Aufgabe wird hinsichtlich des Verfahrens mit den Merkmalen des 1. Patentanspruchs und hinsichtlich der Vorrichtung mit den Merkmalen des 8. Patentanspruchs gelöst. Vorteilhafte Weiterentwicklungen und Ausgestaltungen sind Gegenstand der abhängigenansgsprüche.
Das erfindungsgemäße Verfahren zur Entfernungsbestimmung zwischen einer Bildaufnahmeeinrichtung, z. B. Videokamera, und einem Objekt in einer Szene benutzt als Vorrichtung eine im Bereich der Schärfenebene der Bildaufnahmeeinrichtung schräg gestellte Sensoranordnung, vorzugsweise als Flächensensor in Form einer Matrix.
Schräg gestellt heißt, das die Sensoranordnung nicht in einer Ebene senkrecht zur optischen Achse des Bildaufnahmesystems steht, sondern in einem Winkel α zu dieser Ebene gekippt angeordnet ist. Dabei kann der Sensor um eine oder um zwei Achsen im Raum gekippt sein. Durch letzteres kann die Unschärfe von Kanten und Konturen eines entfernten Objektes in horizontaler, vertikaler oder beliebiger Ausrichtung ermittelt werden.
Auf dem Sensor werden ein oder mehrere Bildlinien eines Objektes ausgewählt und die Unschärfe von Objektpunkten jeweils einer Bildlinie erfasst und ausgewertet. Der Unschärfeverlauf der Punkte einer Bildlinie ist ein Maß für den Abstand des Objektes zur Bildaufnahmeeinrichtung.
Durch die Schrägstellung der Sensoranordnung schneidet die Sensorfläche die Schärfenebenen mehrerer Objektentfernungen. Die Abbildung eines ausgedehnten Objektes erscheint daher nur entlang einer Geraden scharf. Mit zunehmender Entfernung von dieser Geraden im Bild wird die Abbildung unschärfer. Für die Neigung der Sensorfläche um nur eine Achse entspricht diese Gerade einer Bildzeile bzw. -spalte. Abgebildeten Liniensegmenten eines Objektes, die nicht parallel zu dieser Schärfengeraden verlaufen, können somit über die Position der maximalen Schärfe im Bild und die an dieser Stelle vom Sensor durchschnittenen Schärfenebene eine konkrete Entfernung zugeordnet werden. Dabei muss sich das Objekt im Bild nicht notwendigerweise an dieser Position befinden, da der Unschärfeverlauf bei ausreichender Ausdehnung des Objektes extrapoliert werden kann. Es muss aber berücksichtigt werden, dass der Zusammenhang zwischen der Entfernung von der Schärfengeraden im Bild und der Unschärfe der Abbildung nur für rechtwinklig zur optischen Achse stehende Objektliniensegmente linear ist.
Bei Objekten, die keine Bildsegmente mit senkrecht zur optischen Achse verlaufenden Kanten oder Linien aufweisen, kann die Entfernungsbestimmung durch den Einsatz weiterer Mittel präzisiert bzw. stabilisiert werden.
So kann bei bekannter Abbildungsfunktion eines Objektes der Unschärfeverlauf einer Linienform erfasst werden und deren Bewertung ermöglicht einen Rückkehrschluss auf die Entfernung der Linie in der Realität.
Eine andere Möglichkeit, die Genauigkeit der Messergebnisse nach dem beschriebenen Verfahren zu erhöhen, besteht in der Durchführung von Mehrfachaufnahmen mit unterschiedlichen Ausrichtungen der Sensorik. Die unterschiedlich scharfe Abbildung der Bildinhalte ist ein direktes Äquivalent zur Entfernung der Objekte vor der Messeinrichtung.
Für die Durchführung von Mehrfachaufnahmen sind zwei verschiedene Ausführungen denkbar.
1. Messung auf der Basis einer Sensoranordnung. Dazu wird der Sensor in mindestens zwei verschiedene Stellungen bewegt. Z. B. von einer definierten Schräglage in eine oder mehrere andere definierte Schräglagen, wobei eine der Schräglagen auch den Winkel α = 0, also parallel zur Schärfenebene, annehmen kann. In diesen Stellungen wird jeweils ein Bild aufgenommen und ausgewertet.
2. Messung auf der Basis mehrerer Sensoranordnungen. Durchführung zeitgleicher Aufnahmen zwei oder mehrerer Bilder mit unterschiedlich positionierten Sensoren. Diese Variante ermöglicht die Messung bei hoher Eigenbewegung des Messsystems und zusätzlich bewegte Teile sind nicht erforderlich.
   Eine vorteilhafte Weiterentwicklung der Erfindung besteht in der Kombination mit einer optischen Filterung, indem bestimmte Teilalgorithmen in die Bildverarbeitung implementiert werden. So können besonders weit entfernte oder in bestimmten Teilbereichen der Szene befindliche Objekte herausgefiltert werden.

### [Beispiele]

An Hand von Zeichnungen wird schematisch der Aufbau und die Wirkungsweise der Erfindung beispielhaft erläutert.

### Es zeigen:

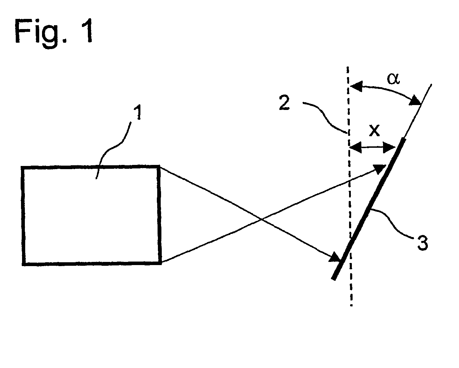

- **Fig. 1**: den grundsätzlichen Aufbau der Entfernungsmessanordnung,
- **Fig. 2**: Abbild einer Objektlinie oder -kante auf der Sensoranordnung, die die Schärfenebene in einer Bildzeile schneidet,
- **Fig. 3**: Abbild eines Objektliniensegmentes auf der Sensoranordnung, das die Schärfenebene nicht schneidet,
- **Fig. 4**: Darstellung des Unschärfeverlaufs von Objektlinien unterschiedlicher Entfernungen.

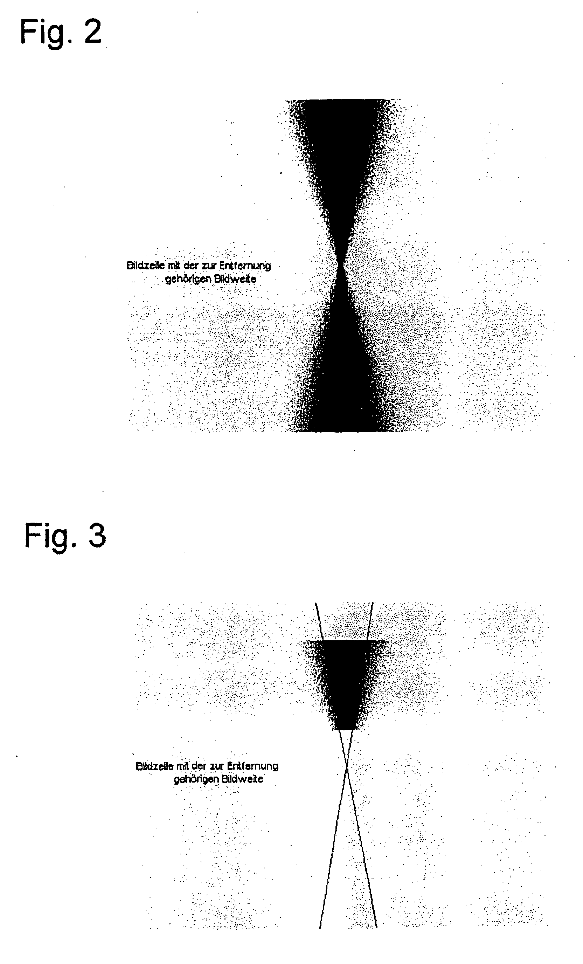

**Fig**. **1** zeigt schematisch den grundsätzlichen Aufbau der Entfernungsmessanordnung mittels visueller Sensorik. Mit dem Objektiv **1** einer Bildaufnahmeeinrichtung wird eine Szene auf einem Sensor **3** abgebildet. Der Sensor **3** ist im Bereich der Schärfenebene **2** (Bildebene) des Objektivs **1** unter einem Winkel α zur Schärfenebene **2** schräg angeordnet.
Bei Ausbildung des Sensors **3** als Flächensensor kann dieser auch räumlich schräg angeordnet, d.h. um zwei Achsen geneigt sein.
Der Abstand x zwischen der Schärfenebene **2** und dem Sensor **3** ist ein Maß für die Unschärfe. Mit zunehmenden Abstand x zur Schärfenebene **2** werden die Bildpunkte eines Objektes einer Szene unscharf.
Aus dem Unschärfeverlauf der Bildpunkte einer Linie mit unterschiedlichem Abstand x wird die Entfernung ermittelt.
Wie das Beispiel in **Fig. 3** zeigt, ist es dabei nicht unbedingt nötig, dass der Sensor **3** die Schärfenebene **2** schneidet.

Das Abbild einer Objektlinie oder -kante auf der schräg gestellten Sensoranordnung ist in **Fig. 2** dargestellt. Die Linie eines Objektes schneidet entsprechend ihrer Entfernung vor der Bildaufnahmeeinrichtung die Schärfenebene in einer Bildzeile.

Die Abbildung eines ausgedehnten Objekts erscheint daher nur entlang einer Geraden scharf. Das ist bei Neigung der Sensorfläche um nur eine Achse die Bildzeile bzw. -spalte, die auf der Zeichnung senkrecht verläuft und für in der Realität senkrecht erscheinende Objektkanten mit ausreichender Ausdehnung auf dem Sensor als "Einschnürung" (Ort der größten Schärfe) erscheint.
Mit zunehmender Entfernung von dieser Bildzeile wird die Abbildung unschärfer oder bei Veränderung der Entfernung des Objektes wird dieser "Einschnürungspunkt" nach oben oder nach unten wandern.

In der Abbildung nach **Fig. 3** befindet sich das Objekt bzw. das Abbild eines Objektliniensegmentes auf der Sensoranordnung nicht notwendigerweise in einer Position, in der die Schärfenebene geschnitten wird. Der Unschärfeverlauf kann bei ausreichender Ausdehnung des Objekts extrapoliert und so der Schnittpunkt mit der Schärfenebene berechnet werden. Dabei muss berücksichtigt werden, dass der Zusammenhang zwischen der Entfernung von der Schärfengeraden im Bild und der Unschärfe der Abbildung nur für rechtwinklig zur optischen Achse stehende Objektsliniensegmente linear ist.

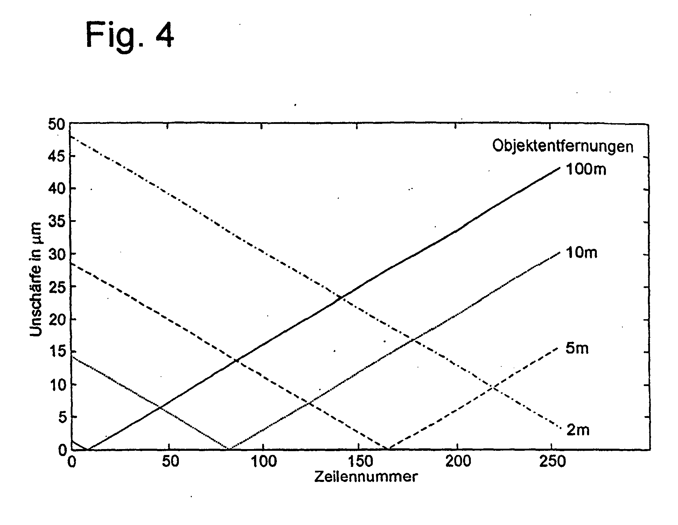

Die Berechnung der Unschärfe in Abhängigkeit von den Zeilennummern einer Sensormatrix ist in **Fig. 4** dargestellt. Das Diagramm zeigt den Unschärfeverlauf von Objektlinien bezogen auf unterschiedliche Entfernungen innerhalb des Abbildungsbereiches des Sensors.
Das Sensorarray besitzt 256 Zeilen, auf dem bei einer Brennweite von 12 mm vier verschieden weit entfernte und über das ganze aufgenommene Bild verlaufende Objektkanten projiziert sind.

Die Sensorfläche ist um einen vorgegebenen Winkel α von 0.01° geneigt und die Kurven entsprechen Objektentfernungen von 2, 5, 10 und 100 Metern.
Die Aufgabe der Entfernungsermittlung besteht darin, den Ort der minimalen Unschärfe zu bestimmen oder gegebenenfalls zu extrapolieren und bei bekannter Kamerageometrie von der Zeile der schärfste Abbildung auf die Entfernung der Objektlinie zu schließen.
Der schärfsten Abbildung ist die Unschärfe 0µm zugeordnet. Der Ort der schärfsten Abbildung liegt für die Objektentfernung 2m (Strich-Punkt-Linie) außerhalb der Sensorfläche.

Der Wertebereich der Unschärfe von einigen 10µm lässt also einerseits eine für die weitere Bildverarbeitung oder - anzeige ausreichend scharfe Abbildung zu, verdeutlicht andererseits aber auch die Notwendigkeit, die Unschärfe und ihren Verlauf in dieser Größenordnung zu bestimmen.

## Patentansprüche

1. Verfahren zur Entfernungsbestimmung zwischen einer Bildaufnahmeeinrichtung (1) und einem Objekt, bei dem im Bereich der Schärfenebene (2) der Bildaufnahmeeinrichtung eine Sensoranordnung (3) in mindestens einer Ebene unter einem Winkel α schräg zur Schärfeebene (2) angeordnet ist, **gekennzeichnet durch** folgende Verfahrensschritte;
a) auf der Sensoranordnung werden ein oder mehrere Bildlinien des Objektes ausgewählt,
b) die Unschärfe von Objektpunkten jeweils einer Bildlinie wird erfasst und ausgewertet, wobei der Unschärfeverlauf der Punkte einer Bildlinie ein Maß für den Abstand des Objektes zur Bildaufnahmeeinrichtung bildet.

2. Verfahren zur Entfernungsbestimmung nach Anspruch 1, **dadurch gekennzeichnet, dass**
der Verlauf der Unschärfe von Objektpunkten einer Bildlinie mit bekannten Abbildungsfunktionen verglichen wird und daraus der genaue Abstand des Objektes mit bekannter Abbildungsfunktion zur Bildaufnahmeeinrichtung bestimmt wird.

3. Verfahren zur Entfernungsbestimmung nach Anspruch 1, **dadurch gekennzeichnet, dass** der Abstand von Objekten mit nicht einer definierten Bildlinie zuordenbaren Objektpunkten durch Mehrfachaufnahmen mit unterschiedlich ausgerichteten Sensoranordnungen gemessen wird und die unterschiedlich scharfe Abbildung der Bildinhalte ein direktes Äquivalent zur Entfernung der Objekte vor der Messeinrichtung ist.

4. Verfahren zur Entfernungsbestimmung nach Anspruch 1 und 3, **dadurch gekennzeichnet, dass**
für die Mehrfachaufnahmen eine Sensoranordnung in mindestens zwei unterschiedliche Stellungen definierter Schräglagen bewegt wird und in jeder dieser Stellungen jeweils ein Bild aufgenommen wird.

5. Verfahren zur Entfernungsbestimmung nach Anspruch 4, **dadurch gekennzeichnet, dass**
eine der Schräglagen der Sensoranordnung auch den Winkel α = 0 gegenüber der Schärfenebene annehmen kann, d.h. senkrecht zur optischen Achse ausgerichtet wird.

6. Verfahren zur Entfernungsbestimmung nach Anspruch 1 und 3, **dadurch gekennzeichnet, dass**
die Mehrfachaufnahmen zeitgleich mit unterschiedlich schräg ausgerichteten Sensoranordnungen durchgeführt werden.

7. Verfahren zur Entfernungsbestimmung nach einem der vorangegangenen Ansprüche,
**dadurch gekennzeichnet, dass**
Objekte bestimmter Unschärfe herausgefiltert werden.

8. Vorrichtung zur Entfernungsbestimmung zwischen einer Bildaufnahmeeinrichtung (1) und einem Objekt, bei dem im Bereich der Schärfenebene (2) der Bildaufnahmeeinrichtung eine Sensoranordnung (3) in mindestens einer Ebene unter einem Winkel α schräg zur Schärfeebene (2) angeordnet ist, **dadurch gekennzeichnet, dass**
im Bereich der Schärfeebene (2) zwei oder mehrere Sensoranordnungen (3) mit unterschiedlichen Winkeln α angeordnet sind.

## Claims

1. A method for determining the distance between an image taking device
(1) and an object, in which in the area of the focal plane (2) of the image taking device a sensor arrangement (3) is arranged in at least one plane inclined to the focal plane (2) at an angle α, **characterized by** the following method steps:
a) one or more image lines of the object are chosen on the sensor arrangement,
b) the unsharpness of object points of one image line each is detected and evaluated, the gradient of unsharpness of the points of an image line being a measure for the distance between the object and the image taking device.

2. The method for determining the distance according to claim 1,
**characterized in that**
the unsharpness gradient of object points of one image line is compared with known imaging functions and from that the exact distance between the object with known imaging function with respect to the image taking device is determined.

3. The method for determining the distance according to claim 1, **characterized in that** the distance of objects with object points that cannot be assigned to a defined image line is measured by means of multiple images taken with differently oriented sensor arrangements and the differently sharp imaging of the image contents is a direct equivalent to the distance of the objects in front of the measuring device.

4. The method for determining the distance according to claim 1 and 3,
**characterized in that**
for the multiple takings a sensor arrangement is moved into at least two different positions of defined inclinations and in each of these positions one image is taken each.

5. The method for determining the distance according to claim 4,
**characterized in that**
one of the inclinations of the sensor arrangement can also assume the angle α = 0 with respect to the focal plane, i.e. is oriented perpendicularly with respect to the optical axis.

6. The method for determining the distance according to claim 1 and 3,
**characterized in that**
the multiple takings are taken simultaneously with differently inclined sensor arrangements.

7. The method for determining the distance according to one of the proceedings claims, **characterized in that**
objects of determined unsharpness are filtered out.

8. A device for determining the distance between an image taking device (1) and an object, in which in the area of the focal plane (2) of the image taking device a sensor arrangement (3) is arranged in at least one plane inclined to the focal plane (2) at an angle α, **characterized in that** in the area of the focal plane (2) two or more sensor arrangements (3) are arranged at different angles α.

## Revendications

1. Procédé de détermination de la distance entre un dispositif d'enregistrement d'image (1) et un objet, dans lequel, dans la zone du plan de mise au point (2) du dispositif d'enregistrement d'image (1), est disposé un système de détection (3) dans au moins un plan formant un angle α qui est incliné par rapport au plan de mise au point (2), **caractérisé par** les étapes suivantes :
a) sélection sur le système de détection d'une ou de plusieurs lignes de l'image de l'objet ;
b) détection et analyse du flou des points de l'objet dans chacune des lignes de l'image, la variation du flou des points d'une ligne de l'image étant un critère de mesure de la distance de l'objet par rapport au dispositif d'enregistrement d'image.

2. Procédé de détermination de distance selon la revendication 1, **caractérisé en ce que** la variation du flou des points d'une ligne de l'image est comparée à des fonctions de reproduction connues, et à partir de là est déterminée la distance exacte de l'objet avec une fonction de reproduction connue par rapport au dispositif d'enregistrement d'image.

3. Procédé de détermination de distance selon la revendication 1, **caractérisé en ce que** la distance d'objets avec des points non associables à une ligne définie de l'image est mesurée par des prises de vue répétées avec des systèmes de détection orientés différemment, et la prise de vue à netteté différente des contenus de l'image est un équivalent direct de la distance des objets devant le dispositif de mesure.

4. Procédé de détermination de distance selon les revendications 1 et 3, **caractérisé en ce que**, pour les prises de vue répétées, un système de détection est déplacé dans au moins deux positions différentes à inclinaisons définies et une image est respectivement enregistrée dans chacune de ces positions.

5. Procédé de détermination de distance selon la revendication 4, **caractérisé en ce que** l'une des inclinaisons du système de détection peut aussi accepter l'angle α = 0 par rapport au plan de mise au point, c'est-à-dire que ledit système est alors orienté perpendiculairement à l'axe optique.

6. Procédé de détermination de distance selon les revendications 1 et 3, **caractérisé en ce que** les prises de vue répétées sont effectuées simultanément avec des systèmes de détection inclinés différemment.

7. Procédé de détermination de distance selon l'une quelconque des revendications précédentes, **caractérisé en ce que** des objets avec un flou déterminé sont éliminés par filtrage.

8. Dispositif de détermination de la distance entre un dispositif d'enregistrement d'image (1) et un objet, dans lequel, dans la zone du plan de mise au point (2) du dispositif d'enregistrement d'image (1), est disposé un système de détection (3) dans au moins un plan en formant un angle α qui est incliné par rapport au plan de mise au point (2), **caractérisé en ce que** deux ou plusieurs systèmes de détection (3) sont agencés avec des angles α différents dans la zone du plan de mise au point (2).
